# EUROPEAN PATENT APPLICATION

(11) **EP 4 624 129 A1**
(43) Date of publication of application: **01.10.2025**
(21) Application number: 25165256.6
(22) Date of filing: 21.03.2025
(51) Int. Cl.: B29C 45/00, B29B 7/48, B29B 7/90, B29C 45/48, B29C 48/385, B29K 105/12

(54) **INJECTION DEVICE, INJECTION MOLDING MACHINE HAVING THE SAME, AND INJECTION MOLDING METHOD**

(30) Priority: 26.03.2024 JP 2024049069
(71) Applicant: Toyo Machinery & Metal Co., Ltd., Akashi-shi, Hyogo 674-0091 (JP); The Doshisha, Kyotanabe-shi, Kyoto (JP)
(72) Inventor: INOUE, Akira, Akashi-shi (JP); INOUE, Makoto, Akashi-shi (JP); TANAKA, Tatsuya, Kyotanabe-shi (JP)
(74) Representative: Pintz, György

(57) **Abstract**

An injection molding machine is configured with: a plasticizing unit (40) configured to cause a supplied thermoplastic resin to be in a completely molten state; a mixing and kneading unit (42) configured to receive the thermoplastic resin in the completely molten state by the plasticizing unit and also configured to receive reinforcing fiber for mixing and kneading the thermoplastic resin and the reinforcing fiber while heating; and a kneading and injection unit (44) configured to inject the thermoplastic resin and the reinforcing fiber, both mixed and kneaded together, into a cavity in a clamping device.

## Description

### BACKGROUND OF THE INVENTION

### Field of the Invention

The present invention relates to, in the field of injection molding, an injection device to supply materials obtained by mixing a thermoplastic resin with reinforcing fiber, an injection molding machine having the same, and an injection molding method.

### Description of the Related Art

In the past, to increase the strength of molded articles formed by injection molding, techniques using fiber reinforced plastics obtained by mixing a thermoplastic resin with reinforcing fiber (glass fiber, carbon fiber, etc.) as materials for the molded articles have been developed (e.g., PTL 1).

PTL 1 discloses a technique in which materials (fiber reinforced thermoplastic resin) obtained by mixing a thermoplastic resin with reinforcing fiber are kneaded by rotation of a screw in a heating cylinder and then injected to fill a cavity in a mold for forming molded articles of the fiber reinforced thermoplastic resin.

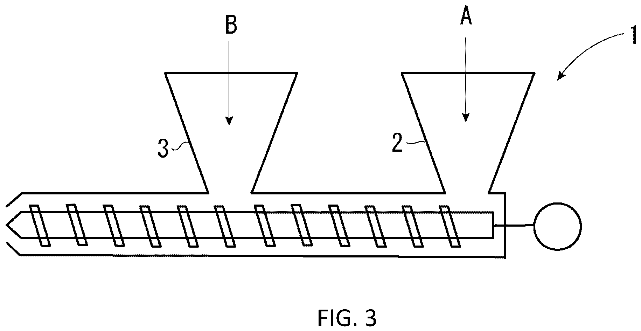

Material feeding devices (injection devices) in injection molding machines in the past are designed to, as described in PTL 1, put a thermoplastic resin and reinforcing fiber in a preliminary mixed state into such an injection device for heat melting in a heating cylinder, or as illustrated in FIG. 3, to provide one injection cylinder 1 in the injection device with two feed ports 2 and 3 and to supply a thermoplastic resin A to the feed port 2 on the upstream side and supply reinforcing fiber B to the feed port 3 on the downstream side for mixing the reinforcing fiber with the thermoplastic resin heat melted in advance.

PTL 1 refers to Japanese Patent No. 3755293.

### SUMMARY OF THE INVENTION

However, the injection device in the past is likely to cause the reinforcing fiber mixed into the thermoplastic resin to break and thus cause the reinforcing fiber in molded articles to have a shorter average length, thereby having a problem that it is difficult to increase the strength of the molded articles to an intended level.

The present invention has been made in view of such a problem, and one or more embodiments thereof provide an injection device capable of increasing the strength of molded articles by causing reinforcing fiber mixed into a thermoplastic resin to be less likely to break and by causing the reinforcing fiber in the molded articles to have a longer average length, an injection molding machine having the same, and an injection molding method.

An aspect of the present invention provides an injection device including:
a plasticizing unit configured to cause a supplied thermoplastic resin to be in a completely molten state;
a mixing and kneading unit configured to receive the thermoplastic resin in the completely molten state by the plasticizing unit and also configured to receive reinforcing fiber for mixing and kneading the thermoplastic resin and the reinforcing fiber while heating; and
a kneading and injection unit configured to supply the thermoplastic resin and the reinforcing fiber, both mixed and kneaded together, to a cavity in a clamping device.

Preferably, the kneading and injection unit has a heating cylinder, a kneading and injection screw, and a kneading and injection screw-operation mechanism configured to rotate and move forward and backward the kneading and injection screw, and
the kneading and injection screw-operation mechanism is operated to perform kneading, dispersion, measurement, and injection of the thermoplastic resin and the reinforcing fiber in the kneading and injection unit.

Another aspect of the present invention provides an injection molding machine, including the injection device described above.

Still another aspect of the present invention provides an injection molding method, including:
causing a supplied thermoplastic resin to be in a completely molten state by a plasticizing unit;
mixing and kneading the thermoplastic resin and the reinforcing fiber while heating with a mixing and kneading screw having received the thermoplastic resin in the completely molten state by the plasticizing unit and the reinforcing fiber; and
supplying the thermoplastic resin and the reinforcing fiber, both mixed and kneaded together, to a cavity in a clamping device using a kneading and injection unit.

The injection device, the injection molding machine having the same, and the injection molding method according to the present invention are designed to separately have the plasticizing unit to melt the thermoplastic resin and the mixing and kneading unit to mix and knead the thermoplastic resin and the reinforcing fiber while heating, thereby causing the thermoplastic resin to be in a completely molten state by the plasticizing unit before being mixed with the reinforcing fiber.

This causes the reinforcing fiber mixed in the thermoplastic resin in a completely molten state to be less likely to break during kneading and thus to be further kneaded by the kneading and injection unit while the reinforcing fiber is still long to promote dispersion of the fiber and to be injected into the cavity to cause the reinforcing fiber in molded articles to have a longer average length, thereby allowing the strength of the molded articles to increase.

### BRIEF DESCRIPTION OF THE DRAWINGS

FIG. 1 is a diagram illustrating an example of an injection molding machine 10 according to an embodiment.
FIG. 2 is a diagram illustrating an example of an injection device 14 according to this embodiment.
FIG. 3 is a diagram illustrating an example of injection devices in the past.

### DETAILED DESCRIPTION OF THE INVENTION

### Configuration of Injection Molding Machine 10

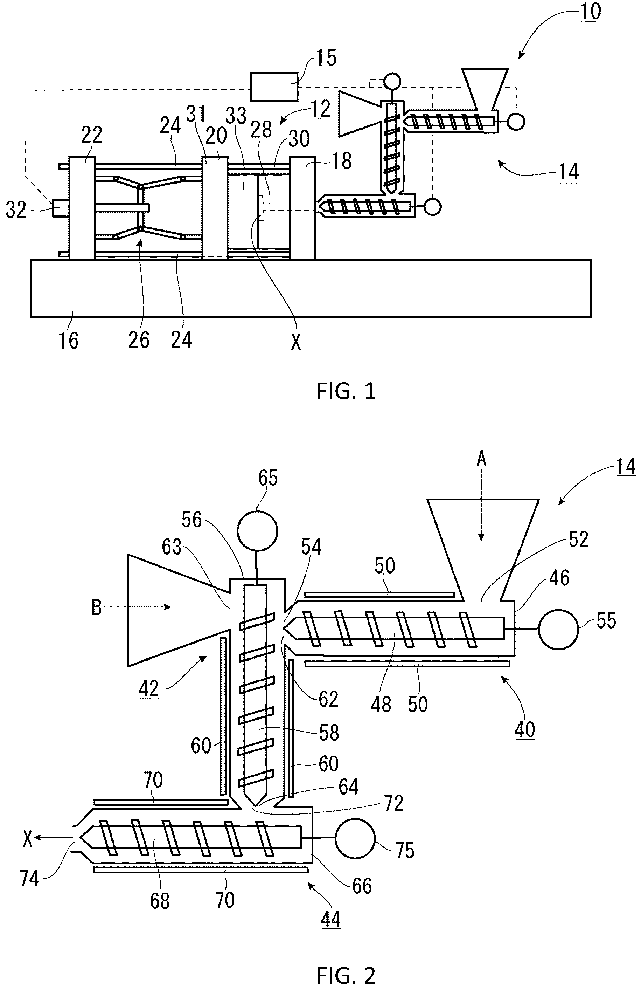

The injection molding machine 10 according to the present embodiment is a machine that repeats a molding cycle, such as mold closing, clamping, injection and filling of a molten resin, measurement, mold opening, and ejection of a molded article, to form molded articles, and as illustrated in FIG. 1, roughly includes a clamping device 12, the injection device 14, and a control device 15.

The clamping device 12 includes a base 16, a fixed plate 18, a movable plate 20, a pressure receiving plate 22, a tie bar 24, and a toggle mechanism 26.

The base 16 is a member to be a foundation of other members configuring the clamping device 12 and the injection device 14.

The fixed plate 18 is fixed on the base 16, and to the fixed plate 18, a fixed mold 30 configuring a mold 28 is attached.

The movable plate 20 is a member to slide on the base 16 so as to move close to and away from the fixed plate 18, and to the movable plate 20, a movable mold 33 configuring the mold 28 is attached. The movable mold 33 contacts the fixed mold 30 to form a cavity X to be filled with a molten resin.

The pressure receiving plate 22 is a member fixed on the base 16 on the opposite side to the fixed plate 18 viewed from the movable plate 20.

The tie bar 24 is a rod member having an end fixed to the fixed plate 18 and the other end fixed to the pressure receiving plate 22. The tie bar 24 is also inserted through a tie bar insertion hole 31 formed in the movable plate 20 arranged between the fixed plate 18 and the pressure receiving plate 22. This allows the movable plate 20 to slide on the base 16 in a left-right direction in FIG. 1 along the tie bar 24. It should be noted that the tie bar 24 to be used includes a plurality (e.g., four) of tie bars.

The toggle mechanism 26 is a mechanism to cause the movable plate 20 to move close to and away from the fixed plate 18, and a clamp driving device 32 is attached to the pressure receiving plate 22.

The movable plate 20 moves along the tie bar 24 (moves in the left-right direction in FIG. 1) by transmission of a driving force of the clamp driving device 32 through the toggle mechanism 26. When the movable plate 20 moves in the left direction, the movable mold 33 is separated from the fixed mold 30. Meanwhile, when the movable plate 20 moves in the right direction, the movable mold 33 abuts on the fixed mold 30 to form a cavity (internal space) inside the mold 28. Then, when further adding a pressure in the direction of moving the movable plate 20 in the right direction, the fixed mold 30 and the movable mold 33 are clamped.

The injection device 14 is a device to inject a molten resin to fill the cavity X inside the mold 28 formed by the movable mold 33 contacting the fixed mold 30, and as illustrated in FIG. 2, is configured with a plasticizing unit 40, a mixing and kneading unit 42, and a kneading and injection unit 44.

The plasticizing unit 40 has a role of causing a supplied thermoplastic resin A to be in a completely molten state and has a heating cylinder 46, a plasticizing screw 48, a heater 50, a thermoplastic resin receiving port 52, a thermoplastic resin discharge port 54, and a plasticizing screw operation mechanism 55.

The heating cylinder 46 is a cylindrical member and has an end portion (upstream side: on the right in FIG. 2) provided with the thermoplastic resin receiving port 52 and the other end portion (downstream side: on the left in FIG. 2) provided with the thermoplastic resin discharge port 54 to discharge the molten thermoplastic resin A.

The plasticizing screw 48 is arranged inside the heating cylinder 46 and has a role of conveying the thermoplastic resin A received from the thermoplastic resin receiving port 52 to the thermoplastic resin discharge port 54.

The heater 50 is a heat source arranged at the outer periphery of the heating cylinder 46. The heat from the heater 50 and the plasticizing screw 48 cause the thermoplastic resin A in the heating cylinder 46 to be in a completely molten state.

It should be noted that the "completely molten state" through the entire description refers to a state where the molten resin contains no solids at all.

The plasticizing screw operation mechanism 55 rotates the plasticizing screw 48.

The mixing and kneading unit 42 has a role of receiving the thermoplastic resin A in the completely molten state by the plasticizing unit 40 and also receiving reinforcing fiber B for mixing and kneading the thermoplastic resin A and the reinforcing fiber B while heating and has a heating cylinder 56, a mixing and kneading screw 58, a heater 60, a molten thermoplastic resin receiving port 62, a reinforcing fiber receiving port 63, a material discharge port 64, and a mixing and kneading screw operation mechanism 65.

The heating cylinder 56 is a cylindrical member and has an end portion (upstream side: on the upper side in FIG. 2) provided with the molten thermoplastic resin receiving port 62 and the reinforcing fiber receiving port 63 and the other end portion (downstream side: on the lower side in FIG. 2) provided with the material discharge port 64 to discharge the mixed and kneaded material of the molten thermoplastic resin A and the reinforcing fiber B.

The mixing and kneading screw 58 is arranged inside the heating cylinder 56 and has a role of conveying the thermoplastic resin A received from the molten thermoplastic resin receiving port 62 and the reinforcing fiber B received from the reinforcing fiber receiving port 63 while mixing and kneading to the material discharge port 64.

The heater 60 is a heat source arranged at the outer periphery of the heating cylinder 56. The heat from the heater 60 causes the thermoplastic resin A in the heating cylinder 56 to maintain the completely molten state.

The mixing and kneading screw operation mechanism 65 rotates the mixing and kneading screw 58.

The kneading and injection unit 44 has a role of further kneading the thermoplastic resin A and the reinforcing fiber B thus mixed and kneaded and injecting into the cavity X of the clamping device 12, and has a heating cylinder 66, a kneading and injection screw 68, a heater 70, a material receiving port 72, a material injection port 74, and a kneading and injection screw-operation mechanism 75.

The heating cylinder 66 is a cylindrical member and has an end portion (upstream side: on the right in FIG. 2) provided with the material receiving port 72 to receive the mixed and kneaded material of the molten thermoplastic resin A and the reinforcing fiber B and the other end portion (downstream side: on the left in FIG. 2) provided with the material injection port 74 to inject the material into the clamping device 12.

The kneading and injection screw 68 is arranged inside the heating cylinder 66 and has a role of kneading, dispersing, and measuring the material received from the material receiving port 72 for injecting from the material injection port 74.

The heater 70 is a heat source arranged at the outer periphery of the heating cylinder 66. The heat from the heater 70 causes the thermoplastic resin A in the heating cylinder 66 to maintain the completely molten state.

The kneading and injection screw-operation mechanism 75 rotates the kneading and injection screw 68 to perform kneading and dispersion of the material (the thermoplastic resin A and the reinforcing fiber B) in the kneading and injection unit 44. In addition, the kneading and injection screw-operation mechanism 75 performs measurement of the material and injection of the material by causing the kneading and injection screw 68 to move forward and backward.

Although the control device 15 is a device to control the entire molding cycle by the injection molding machine 10, descriptions are given below only to control of the injection device 14 by the control device 15.

### Procedure of Injection Molding using Injection Molding Machine 10 according to this

### Embodiment

A description is then given to the procedure of injection molding molded articles using the injection molding machine 10 according to the embodiment described above, mainly to the procedure until injection of the material into the cavity X by the injection device 14.

The plasticizing unit 40, the mixing and kneading unit 42, and the kneading and injection unit 44 configuring the injection device 14 are heated to predetermined temperatures respectively by the heater 50, the heater 60, and the heater 70.

Then, the thermoplastic resin A in pellets is charged into the thermoplastic resin receiving port 52 of the plasticizing unit 40.

The thermoplastic resin A thus charged is conveyed to the thermoplastic resin discharge port 54 of the plasticizing unit 40 by the plasticizing screw 48 and is turned into a completely molten state by the heat from the heater 50 and the plasticizing screw 48 during the conveyance.

The thermoplastic resin A in the completely molten state is discharged from the thermoplastic resin discharge port 54 and then supplied from the molten thermoplastic resin receiving port 62 to the mixing and kneading unit 42. In conjunction with this, the reinforcing fiber B is also supplied to the mixing and kneading unit 42 from the reinforcing fiber receiving port 63.

It should be noted that examples of the kind of reinforcing fiber B to be supplied to the mixing and kneading unit 42 include glass fiber, carbon fiber, and natural fiber.

The reinforcing fiber B supplied to the mixing and kneading unit 42 is conveyed to the material discharge port 64 by the mixing and kneading screw 58 while being mixed with the thermoplastic resin A in the completely molten state. During the conveyance, the heat from the heater 60 maintains the completely molten state of the thermoplastic resin A.

The material (mixture of the thermoplastic resin A and the reinforcing fiber B) discharged from the material discharge port 64 is supplied from the material receiving port 72 to the kneading and injection unit 44. The material is kneaded, dispersed, and measured in the kneading and injection unit 44, and then injected into the cavity X of the clamping device 12 from the material injection port 74.

The material injected into the cavity X is cooled in the cavity X to be casted as a molded article. The finished molded article is ejected by opening the mold 28.

### Characteristics of Injection Molding Machine 10

The injection molding machine 10 according to this embodiment is designed to separately have the plasticizing unit 40 to melt the thermoplastic resin A and the mixing and kneading unit 42 to mix and knead the thermoplastic resin A and the reinforcing fiber B while heating to cause the thermoplastic resin A to be in a completely molten state in the plasticizing unit 40 before being mixed with the reinforcing fiber B.

This causes the reinforcing fiber B mixed in the thermoplastic resin A in the completely molten state to be less likely to break during kneading, and thus the reinforcing fiber B is further kneaded by the kneading and injection unit 44 while being still long to promote dispersion of the fiber and to be injected into the cavity X to cause the reinforcing fiber B in molded articles to have a longer average length, thereby allowing the strength of the molded articles to increase.

### First Modification

Although the illustrative drawings (FIG. 2, etc.) of the injection molding machine 10 according to the above embodiment illustrate the plasticizing unit 40 of a horizontal type (horizontally feeding type), the mixing and kneading unit 42 of a vertical type (downward feeding type), and the kneading and injection unit 44 of a horizontal type, the injection molding machine 10 may have, instead of this configuration, for example, all the units of a horizontal type, or the plasticizing unit 40 and the mixing and kneading unit 42 of a vertical type and the kneading and injection unit 44 of a horizontal type.

The one or more embodiments and modifications of the present disclosure are to be considered in all respects as illustrative, and not restrictive. The scope of the present invention is indicated by the appended claims rather than by the foregoing description and is intended to include all modifications in the meaning and scope equivalent to the claims.

## Claims

1. An injection device comprising:
a plasticizing unit configured to cause a supplied thermoplastic resin to be in a completely molten state;
a mixing and kneading unit configured to receive the thermoplastic resin in the completely molten state by the plasticizing unit and also configured to receive reinforcing fiber for mixing and kneading the thermoplastic resin and the reinforcing fiber while heating; and
a kneading and injection unit configured to inject the thermoplastic resin and the reinforcing fiber, both mixed and kneaded together, into a cavity in a clamping device.

2. The injection device according to Claim 1, wherein
the kneading and injection unit has a kneading and injection screw and a kneading and injection screw-operation mechanism configured to rotate and move forward and backward the kneading and injection screw, and
the kneading and injection screw-operation mechanism is operated to perform kneading, dispersion, measurement, and injection of the thermoplastic resin and the reinforcing fiber in the kneading and injection unit.

3. An injection molding machine, comprising the injection device according to Claim 1 or 2.

4. An injection molding method, comprising:
causing a supplied thermoplastic resin to be in a completely molten state by a plasticizing unit;
mixing and kneading the thermoplastic resin and the reinforcing fiber while heating with a mixing and kneading screw having received the thermoplastic resin in the completely molten state by the plasticizing unit and the reinforcing fiber; and
injecting the thermoplastic resin and the reinforcing fiber, both mixed and kneaded together, into a cavity in a clamping device using a kneading and injection unit.
